# EUROPEAN PATENT APPLICATION

(11) **EP 4 297 399 A1**
(43) Date of publication of application: **27.12.2023**
(21) Application number: 22774745.8
(22) Date of filing: 10.02.2022
(51) Int. Cl.: H04N 7/15, H04N 21/239, H04L 67/02

(54) **DISTRIBUTION SYSTEM**

(30) Priority: 25.03.2021 JP 2021051230
(71) Applicant: JVCKENWOOD Corporation, Yokohama-shi, Kanagawa 221-0022 (JP)
(72) Inventor: NISHIMURA, Noriko, Yokohama-shi, Kanagawa 221-0022 (JP)
(74) Representative: Pritzlaff, Stefanie Lydia
(86) International application number: PCT/JP2022/005261
(87) International publication number: WO 2022/201944

(57) **Abstract**

A distribution system includes a distribution apparatus configured to acquire a demonstration video of a performer who performs a demonstration and transmit the acquired demonstration video; a server apparatus configured to receive the demonstration video transmitted from the distribution apparatus, generate a distribution video based on the received demonstration video, and transmit the generated distribution video; and a receiving apparatus configured to receive the distribution video transmitted from the server apparatus and display the received distribution video on a display of a receiving side, wherein the receiving apparatus is further configured to acquire a viewer video by capturing images of a viewer watching the distribution video and transmit the acquired viewer video; the server apparatus is further configured to receive the viewer video transmitted from the receiving apparatus, generate a viewing situation video in which the viewer video is displayed or not displayed in a display mode according to a viewing situation of the viewer watching the distribution video, and transmit the generated viewing situation video; and the distribution apparatus is further configured to receive the viewing situation video transmitted from the server apparatus and display the received viewing situation video on a display of a distributing side.

## Description

### Field

The present disclosure relates to a distribution system.

### Background

A distribution system is known which includes a distribution apparatus for distributing a video such as a demonstration video of a performer who performs a demonstration, and a receiving apparatus for receiving and displaying a distributed video (for example, see Patent Literature 1).

### Citation List

### Patent Literature

Patent Literature 1: Japanese Patent No. 3832318

### Summary

### Technical Problem

With the distribution system disclosed in Patent Literature 1 or the like, it is difficult to give a sense of presence to the performer and a viewer.

The present disclosure has been made in light of the above, and has an object to provide a distribution system capable of giving a sense of presence to the performer and the viewer.

### Solution to Problem

According to one aspect of the present invention, there is provided a distribution system comprising: a distribution apparatus configured to acquire a demonstration video of a performer who performs a demonstration and transmit the acquired demonstration video; a server apparatus configured to receive the demonstration video transmitted from the distribution apparatus, generate a distribution video based on the received demonstration video, and transmit the generated distribution video; and a receiving apparatus configured to receive the distribution video transmitted from the server apparatus and display the received distribution video on a display of a receiving side, wherein the receiving apparatus is further configured to acquire a viewer video by capturing images of a viewer watching the distribution video and transmit the acquired viewer video; the server apparatus is further configured to receive the viewer video transmitted from the receiving apparatus, generate a viewing situation video in which the viewer video is displayed or not displayed in a display mode according to a viewing situation of the viewer watching the distribution video, and transmit the generated viewing situation video; and the distribution apparatus is further configured to receive the viewing situation video transmitted from the server apparatus and display the received viewing situation video on a display of a distributing side.

### Advantageous Effects of Invention

According to the present disclosure, it is possible to provide a distribution system that can give a sense of presence to the performer and the viewer.

### Brief Description of Drawings

FIG. 1 is a diagram schematically illustrating an example of a distribution system according to an embodiment;
FIG. 2 is a functional block diagram illustrating an example of a distribution apparatus;
FIG. 3 is a diagram schematically illustrating the distribution apparatus and an example of devices connected to the distribution apparatus;
FIG. 4 is a functional block diagram illustrating an example of a server apparatus;
FIG. 5 is a functional block diagram illustrating an example of a receiving apparatus;
FIG. 6 is a diagram schematically illustrating an example of a distribution video;
FIG. 7 is a diagram schematically illustrating an example of a viewing situation video;
FIG. 8 is a diagram for explaining an example of setting a display mode of a viewer video;
FIG. 9 is a diagram for explaining an example of setting a display mode of a viewer video;
FIG. 10 is a diagram for explaining an example of setting a display mode of a viewer video;
FIG. 11 is a diagram for explaining an example of setting a display mode of a viewer video;
FIG. 12 is a flowchart illustrating an operation flow of the distribution system according to the embodiment;
FIG. 13 is a diagram schematically illustrating the distribution apparatus and another example of devices connected to the distribution apparatus; and
FIG. 14 is a diagram illustrating an example of a management screen page displayed by the distribution apparatus.

### Description of Embodiments

Embodiments of a distribution system according to the present disclosure will be explained below with reference to the accompanying drawings. The present invention is not limited to the following embodiments. Further, the constituent elements in the following embodiments encompass those that can be easily replaced by those skilled in the art, or those that are substantially the same.

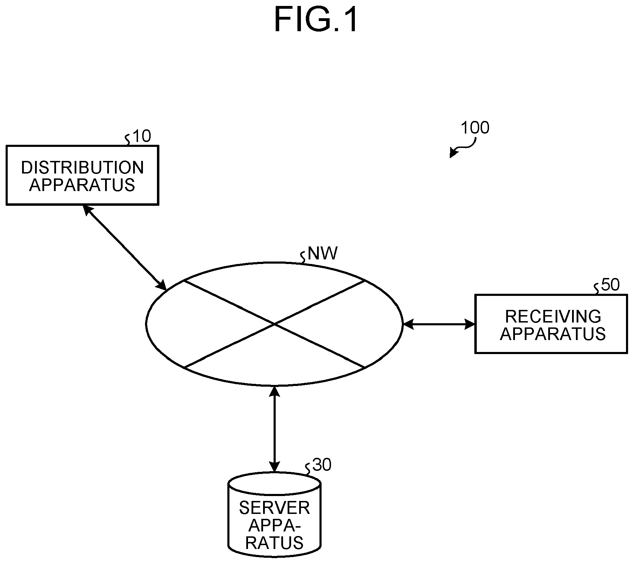

FIG. 1 is a diagram schematically illustrating an example of a distribution system 100 according to one embodiment. As illustrated in FIG. 1, a distribution system 100 includes a distribution apparatus 10, a server apparatus 30, and a receiving apparatus 50. The distribution apparatus 10, the server apparatus 30, and the receiving apparatus 50 are connected to each other through a network NW. The distribution system 100 distributes video and audio of a demonstration by a performer to viewers via the network NW. Here, examples of a demonstration by a performer include playing musical instruments or the like, singing songs, theatrical performances, dances, acrobatics, variety entertainments, recitations, presentations, weddings, fitness exercises, lectures, lessons, etc.

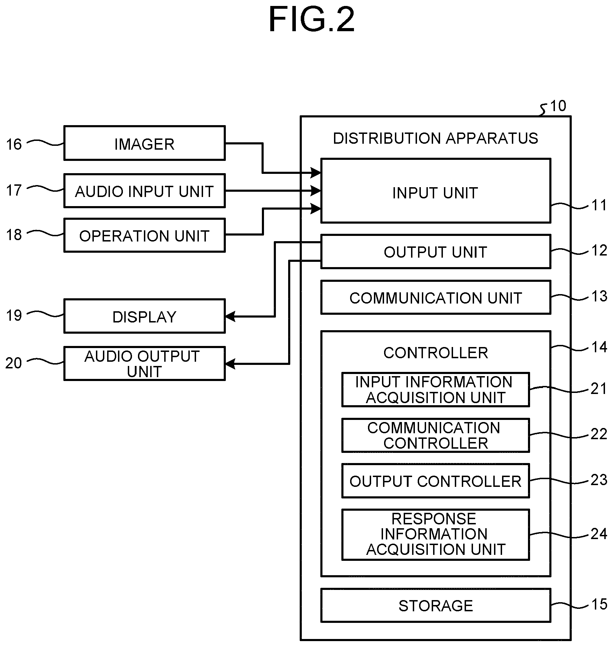

FIG. 2 is a functional block diagram illustrating an example of a distribution apparatus 10. As illustrated in FIG. 2, the distribution apparatus 10 includes an input unit 11, an output unit 12, a communication unit 13, a controller 14, and a storage 15.

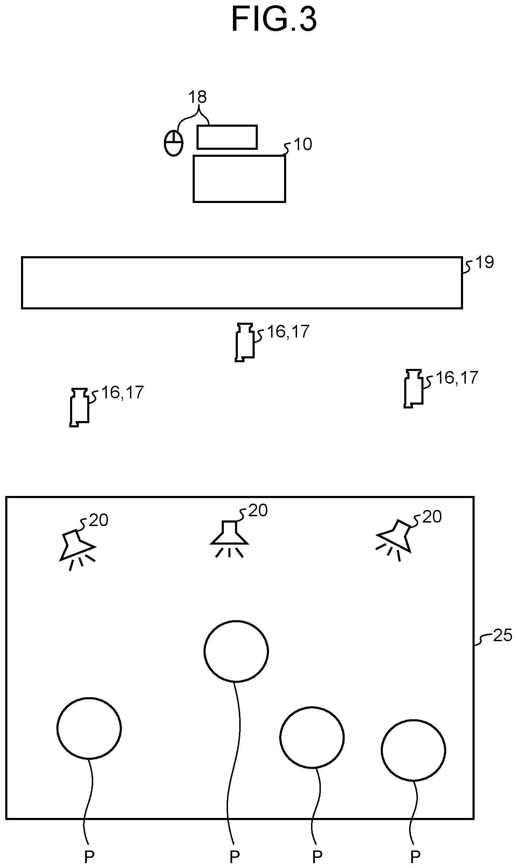

The input unit 11 is connected to input devices, such as an imager 16, an audio input unit 17, and an operation unit 18, for example. The distribution apparatus 10 may be configured to include some or all of the imager 16, the audio input unit 17, the operation unit 18, etc. FIG. 3 is a diagram schematically illustrating the distribution apparatus 10 and an example of devices connected to the distribution apparatus 10. The imager 16 includes, for example, one or more cameras. The imager 16 captures images of a demonstration by a performer P, and generates a demonstration video. When multiple imagers 16 are provided, they are positioned, for example, on a stage left, a stage center, and a stage right. The audio input unit 17 includes, for example, one or more microphones. The audio input unit 17 picks up sounds of a demonstration by the performer, and generates a demonstration audio. The audio input unit 17 may be built in the imager 16, for example. The audio input unit 17 may be equipped with an interface for inputting sound from an electronic musical instrument, audio mixer, or the like (so-called a line input), in place of or in addition to the microphone. The operation unit 18 is composed of input devices, such as a keyboard, a mouse, and a touch panel, for example. The operation unit 18 is configured to input predetermined information to the distribution apparatus 10. The operation unit 18 can, for example, perform an input operation to select one or more viewer videos from a viewing situation video displayed in a display 19, which will be described later.

The output unit 12 is connected to output devices, such as the display (the display of the distributing side) 19 and an audio output unit 20. The distribution apparatus 10 may be configured to include some or all of the display (the display of the distributing side) 19, the audio output unit 20, etc. The display 19 displays information, such as images. For the display 19, various display devices may be used, which include, for example, a projection system formed of, e.g., a projector device and a projection screen, a display panel, such as a liquid crystal panel, etc. One or more displays 19 may be provided. The display 19 can display a viewing situation video described later. In the embodiment, the display 19 has a size that covers an entire demonstration space 25 where the performer performs a demonstration, but is not limited thereto. For example, it is possible to organize participants in a partial space and to provide the display 19 in an empty space. The audio output unit 20 outputs audio information. The audio output unit 20 is composed of, for example, a speaker or the like.

The communication unit 13 can transmit and receive information via the network NW. The communication unit 13 may perform communication by either wired communication or wireless communication. The communication unit 13 transmits and receives information to and from the server apparatus 30.

The controller 14 includes a processing device, such as a CPU (Central Processing Unit), and a storage device, such as an RAM (Random Access Memory) or ROM (Read Only Memory). The controller 14 totally controls the distribution apparatus 10. The controller 14 includes an input information acquisition unit 21, a communication controller 22, an output controller 23, and a response information acquisition unit 24.

The input information acquisition unit 21 acquires information input to the input unit 11 such as a demonstration video, a demonstration audio, and an operation signal. The communication controller 22 acquires various information received by the communication unit 13.

The communication controller 22 causes the demonstration video and the demonstration audio acquired by the input information acquisition unit 21 to be transmitted from the communication unit 13 to the server apparatus 30. The communication controller 22 causes response information of the performer, which will be described later, to be transmitted from the communication unit 13 to the server apparatus 30.

The output controller 23 controls the operation of the display 19 and the audio output unit 20. The output controller 23 sets display contents of the display 19. The output controller 23 causes the display 19 to display the viewing situation video transmitted from the server apparatus 30, which will be described later.

The response information acquisition unit 24 acquires response information of the performer with respect to the viewing situation video displayed on the display 19. The response information includes, for example, information indicating that the performer has responded to a viewer video displayed in a viewing video, and information indicating the target viewer (or receiving apparatus 50) to which the performer has responded.

The storage 15 stores various information. The storage 15 includes a storage, such as a hard disk drive or solid state drive, for example. Here, as the storage 15, an external storage medium, such as a removable disk, may be used.

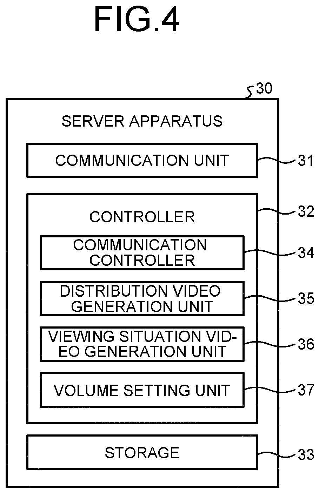

FIG. 4 is a functional block diagram illustrating an example of the server apparatus 30. As illustrated in FIG. 4, the server apparatus 30 includes a communication unit 31, a controller 32, and a storage 33. The communication unit 31 can communicate information with the distribution apparatus 10 and the receiving apparatus 50 via the network NW.

The controller 32 totally controls the operation of the server apparatus 30. The controller 32 includes a processing device, such as a CPU, and a storage device, such as an RAM or ROM. The controller 32 includes a communication controller 34, a distribution video generation unit 35, a viewing situation video generation unit 36, and a volume setting unit 37.

The communication controller 34 controls the operation of the communication unit 31. The communication controller 34 acquires various information received by the communication unit 31. Further, the communication controller 34 causes various information to be transmitted from the communication unit 31.

The distribution video generation unit 35 generates a distribution video based on the demonstration video transmitted from the distribution apparatus 10. The distribution video is a video to be displayed on a display 59 of the receiving apparatus 50, which will be described later. The distribution video generation unit 35 may be configured to be included in the distribution apparatus 10. Alternatively, the distribution video generation unit 35 may be configured to be included in the receiving apparatus 50. In this case, the receiving apparatus 50 generates a video (a distribution video) to be displayed on the display 59 based on the demonstration video.

The viewing situation video generation unit 36 generates a viewing situation video based on the viewer video transmitted from the receiving apparatus 50. The viewing situation video is a video that shows the viewing situation of the viewer watching a distribution video 70. The viewing situation video is a video that displays or does not display the viewer video in a display mode according to the viewing situation of the viewer watching the distribution video 70.

The volume setting unit 37 sets volume of a demonstration audio and volume of a viewer audio described later.

The storage 33 stores various information. The storage 33 includes a storage device, such as a hard disk drive or solid state drive, for example. Here, as the storage 33, an external storage medium, such as a removable disk, may be used. The storage 33 stores data of a distribution video to be displayed on the display of the receiving apparatus 50, which will be described later.

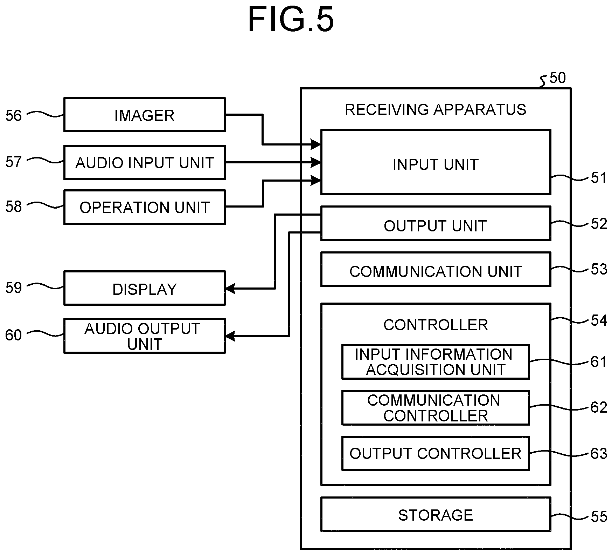

FIG. 5 is a functional block diagram illustrating an example of the receiving apparatus 50. As illustrated in FIG. 5, the receiving apparatus 50 includes an input unit 51, an output unit 52, a communication unit 53, a controller 54, and a storage 55. The receiving apparatus 50 may be a general-purpose terminal, such as a smartphone, tablet, personal computer, or karaoke terminal, for example. The receiving apparatus 50 is not limited to such a general-purpose terminal, but may be a dedicated terminal. The receiving apparatus 50 may be a terminal owned by a viewer, or may be a terminal owned by a distribution business operator or a business operator who manages a facility (a facility equipped with the receiving apparatus 50), such as a karaoke store. A terminal apparatus 50 owned by a business operator may be rented to a viewer by the business operator and used by the viewer. Alternatively, the viewer may visit a facility (a facility equipped with the receiving apparatus 50), such as a karaoke store managed by the business operator, and use the terminal apparatus 50. The distribution system 100 includes one or more receiving apparatuses 50.

The input unit 51 performs input of various information. The input unit 51 is connected to an imager 56, an audio input unit 57, an operation unit 58, etc. The receiving apparatus 50 may be configured to include some or all of the imager 56, the audio input unit 57, the operation unit 58, etc. The imager 56 includes, for example, one or more cameras. The imager 56 captures images of the viewer watching the distribution video, and generates a viewer video. The audio input unit 57 includes, for example, one or more microphones. The audio input unit 57 picks up sounds, such as audio and/or applause, of the viewer watching the distribution video, and generates a viewer audio. The audio input unit 57 may be built in the imager 56, for example. The operation unit 58 is composed of input devices, such as a keyboard, a mouse, and a touch panel, for example. The operation unit 58 is configured to input predetermined information to the receiving apparatus 50. The operation unit 58 can be used to set a position of an icon of the viewer, for example.

The output unit 52 is connected to the display (the display of the receiving side) 59, an audio output unit 60, etc. The receiving apparatus 50 may be configured to include some or all of the display (the display of the receiving side) 59, the audio output unit 60, etc. The display 59 displays information, such as images. For example, the display 59 includes a display panel, such as a liquid crystal panel. The display 59 can display the distribution video 70. The display 59 of the receiving apparatus 50 may display a user interface (an operation screen page of an application software) in addition to the distribution video 70. The user interface may be a dedicated application (so-called a native application) or an application operated by a web browser (so-called a web application). The audio output unit 20 outputs audio information. The audio output unit 20 is composed of, for example, a speaker or the like.

The communication unit 53 can transmit and receive information via the network NW. The communication unit 53 may perform communication by either wired communication or wireless communication. The communication unit 53 transmits and receives information to and from the server apparatus 30.

The controller 54 includes a processing device, such as a CPU, and a storage device, such as an RAM or ROM. The controller 54 totally controls the receiving apparatus 50. The controller 54 includes an input information acquisition unit 61, a communication controller 62, and an output controller 63.

The input information acquisition unit 61 acquires information input to the input unit 51 such as a viewer video, a viewer audio, and an operation signal. The communication controller 62 acquires various information received by the communication unit 53. Further, the communication controller 62 causes the viewer video and the viewer audio acquired by the input information acquisition part 61 to be transmitted from the communication unit 53.

The output controller 63 controls operations of the display 59 and the audio output unit 60. The output controller 63 sets the display contents of the display 59. The output controller 63 sets a display mode of the viewer video to be displayed on the display 59. The output controller 23 sets a display mode of the viewer video based on the status information from the receiving apparatus 50 described later. The specific setting operation for the display mode of the viewer video by the output controller 23 will be described later.

The storage 55 includes a storage device, such as a hard disk drive or solid state drive, for example. Here, as the storage 55, an external storage medium, such as a removable disk, may be used. The storage 55 stores various information.

Next, an explanation will be given of an example of an operation of the distribution system 100 configured as described above. The imager 16 captures images and the audio input unit 17 picks up sounds from a certain demonstration performed by a performer to generate a demonstration video and a demonstration audio. Here, multiple imagers 16 arranged in different directions such as the stage left, the stage center, and the stage right, for example, may be used to capture images of the demonstration by the performer. The demonstration video captured by the imagers 16 and the demonstration audio picked up by the audio input unit 17 are input to the input unit 11 of the distribution apparatus 10.

In the distribution apparatus 10, the input information acquisition unit 21 acquires the demonstration video and the demonstration audio input to the input unit 11. Under the control of the communication controller 22, the demonstration video and the demonstration audio acquired by the input information acquisition unit 21 are transmitted from the communication unit 13 to the server apparatus 30. The server apparatus 30 receives the demonstration video and the demonstration audio transmitted from the distribution apparatus 10.

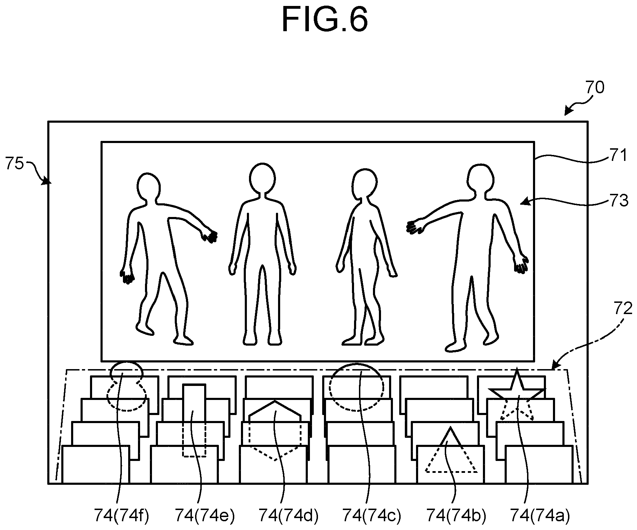

The distribution video generation unit 35 generates a distribution video based on the demonstration video transmitted from the distribution apparatus 10. FIG. 6 is a diagram schematically illustrating an example of the distribution video. As illustrated in FIG. 6, the distribution video 70 includes a display area 71 and a background image 75 in which an icon arrangement area 72 is provided. The display area 71 is an area for displaying a demonstration video 73 transmitted from the distribution apparatus 10. The display area 71 corresponds to a stage in the demonstration site, for example. The icon arrangement area 72 is provided corresponding to the display area 71. The icon arrangement area 72 is an area where the icons 74 of viewers watching the demonstration video can be arranged. The icon arrangement area 72 corresponds to an auditorium in the demonstration site, for example. The distribution video 70 may be a so-called a Virtual Reality video or a 360 degree video. The distribution video generation unit 35 synthesizes the demonstration video 73 transmitted from the distribution apparatus 10 into the display area 71 of the background image 75. The display 59 of the receiving apparatus 50 may be divided into multiple displays, such as a large screen display, a smartphone, a tablet, a karaoke terminal, etc., for example. When the display 59 is divided into multiple displays, the distribution video generation unit 35 may generate a distribution video such that, for example, the display area 71 is displayed on a large screen display and the icon arrangement area is displayed on a smartphone, a tablet, a karaoke terminal, or the like. For the distribution video 70, it may be preset such that, when a drag or swipe operation is performed on the viewer's own icon 74 with the operation unit 58 of the receiving apparatus 50, a position of the icon 74 can be moved, and, when a drag or swipe operation is performed on a part other than the viewer's own icon 74, an angle or a range for displaying the video can be changed. Further, it may be preset such that, when a pinch-in/pinch-out operation or a scroll operation is performed on the touch panel, a display range and an enlargement ratio of the distribution video 70 can be changed. For example, in order to display only the demonstration video 73, this operation can be used to cause the demonstration video 73 to be the same size as the display 59 of the receiving apparatus 50. Further, it may be preset such that, as a result of such an operation being performed, the audio from the icon 74 which comes to be no longer displayed on the display 59 of the receiving apparatus 50 or the demonstration audio of the demonstration video 73 which comes to be no longer displayed on the display 59 is not output from the audio output unit 60.

Further, the viewer accesses the server apparatus 30 from the receiving apparatus 50, and performs setting to arrange the icon 74 to a desired position in the icon arrangement area 72 of the background image 75. The distribution video generation unit 35 synthesizes the icon 74 at the set position in the icon arrangement area 72 of the background image 75.

The distribution video generation unit 35 synthesizes the demonstration video 73 into the display area 71 of the background image 75 and synthesizes the icons 74 into the icon arrangement area 72 to generate a distribution video 70. The example illustrated in FIG. 6 shows a distribution video 70 in which six icons 74 (74a to 74f) are synthesized. In the explanation below, when multiple icons 74 illustrated are distinguished from each other, a symbol indicating each icon 74 is attached for description, as an icon 74a, an icon 74b, etc. Here, when multiple imagers 16 arranged in different directions are used to capture images of a demonstration by a performer, the distribution video generation unit 35 can select a demonstration video to be synthesized into the distribution video 70 based on a positional relationship between the display area 71 and the icon 74 from multiple demonstration videos. For example, when an icon 74 is arranged on the stage left in the display area 71, the distribution video generation unit 35 can synthesize the demonstration video 73 captured from the stage left of the demonstration by the performer into the distribution video 70 to be transmitted to the receiving apparatus 50 corresponding to the icon 74. Specifically, for example, regarding a selection of one demonstration video from the multiple demonstration videos 73, the icon arrangement area 72 may be divided into multiple areas to provide selection areas, so that the distribution video generation unit 35 can select a demonstration video 73 based on which selection area the icon 74 is positioned in. Further, the distribution video generation unit 35 may expand or reduce the demonstration video 73 based on a position of the icon 72. In this case, the distribution video generation unit 35 may perform the expansion or reduction, for example, while using a position close to the position of the icon 72 as a center in a horizontal direction of the demonstration video 73, and using a face image of the performer as a center in a vertical direction of the demonstration video 73. Further, based on the relationship between the display area 71 and the icon 74, the distribution video generation unit 35 preferably performs image processing so that the demonstration video 73 can be changed smoothly in accordance with the movement of the icon 74. In this case, the distribution video generation unit 35 preferably performs image processing by using videos captured by dozens of the imagers 16, or by using 3D modeling or the like. Further, without changing the position of the icon 74, the distribution video generation unit 35 may switch the demonstration video 73 to an expanded video, when the viewer clicks or taps a predetermined icon (for example, an icon indicating an expansion/reduction operation of binoculars or the like). Here, the distribution video generation unit 35 may record a timing (time point) when a predetermined icon is clicked or tapped in association with each viewer, and may add, to the icon 74, an indication that viewers of the same or similar (close) timing are compatible. As an indication of the good compatibility, the distribution video generation unit 35 may generate a video that shows, for example, a percentage (a numerical value indicating a degree of compatibility) together with the icon 74, may generate a video that shows the icon 74 of a viewer with better compatibility in a larger size, or may generate a vide that displays the icon 74 as another viewer who can be recommended for intercommunion.

Further, the volume setting unit 37 may set a volume of the demonstration audio based on the positional relationship between the display area 71 and the icon 74 in the distribution video 70. For example, the volume setting unit 37 may set such that the closer the icon 74 is arranged to the display area 71, the lager the volume of the demonstration audio to be transmitted to the receiving apparatus 50 corresponding to this icon 74. Also, the volume setting unit 37 may set such that the farther the icon 74 is arranged from the display area 71, the smaller the volume of the demonstration audio to be transmitted to the receiving apparatus 50 corresponding to this icon 74. With this operation, it is possible to hear the audio in the same way as when watching the demonstration at the demonstration site. Further, for the same purpose, the volume setting unit 37 may adjust the volume for each audio component included in the demonstration audio in accordance with the position in the lateral direction, such as the stage left, the stage center, and the stage right of the display area 71. As a specific example, the volume setting unit 37 may increase the volume of musical instruments demonstrated on the stage right when the icon 74 is positioned on the stage right. The volume setting unit 37 may set the frequency characteristic as well as the volume. In addition, by providing the icon 74 with information indicating a direction to give directivity of audio, the volume setting unit 37 may change the volume, the audio component, the frequency characteristic, etc. in accordance with the direction of the icon 74.

The generated distribution video 70 and the demonstration audio are distributed to the receiving apparatus 50 under the control of the communication controller 34.

The receiving apparatus 50 receives the distribution video 70 transmitted from the server apparatus 30. The communication controller 62 acquires the received distribution video 70. The output controller 63 causes the display 59 to display the acquired distribution video 70. The viewer can watch the distribution video 70 displayed on the display 59.

The imager 56 captures images of the viewer watching the distribution video 70 to generate a viewer video. The audio input unit 57 picks up sounds of the viewer watching the distribution video 70 to generate a viewer audio. The viewer video and the viewer audio are input to the input unit 51. The input information acquisition unit 61 acquires the input viewer video and the input viewer audio. Under the control of the communication controller 62, the acquired viewer video and the acquired viewer audio are transmitted from the communication unit 53 to the server apparatus 30.

The server apparatus 30 receives the viewer video and the viewer audio. Further, the communication controller 34 may transmit the received viewer audio, for example, to a receiving apparatus 50 different from the receiving apparatus 50 of the receiving destination. With this operation, it is possible for viewers to grasp reaction of other viewers to the distribution video 70, in the same way that members of the audience can grasp cheers or the like of other members when watching a demonstration at a demonstration site. In this case, the volume setting unit 37 may set the volume of the viewer audio based on the positional relationship between the icons 74 arranged in the icon arrangement area 72. For example, the volume setting unit 37 may set such that the closer two icons 74 are arranged to each other, the larger the volume of the viewer audio to be transmitted to the receiving apparatus 50 corresponding to the other of these icons 74. Also, the volume setting unit 37 may set such that the farther two icons 74 are arranged to each other, the smaller the volume of the viewer audio to be transmitted to the receiving apparatus 50 corresponding to the other of these icons 74.

The distribution video generation unit 35 may synthesize an acquired viewer video into the icon arrangement area 72 instead of the icon 74 or in addition to the icon 74. In this case, the distribution video 70 is transmitted to each receiving apparatus 50 in a state in which the viewer video of one viewer is displayed. In other words, the viewer video of one viewer is distributed to other viewers. With this operation, it is possible for the viewers to grasp states of other viewers with respect to the distribution video 70 in the same way that members of the audience can grasp states or the like of other members when watching a demonstration at a demonstration site. Also, with this operation, it may be preset such that the viewers whose icons 74 are arranged close to each other can talk to each other before the demonstration starts, during breaks, or after the demonstration ends.
The position of the viewer's own icon 74 may be moved by an operation such as drag and drop of this icon 74, or may be moved in accordance with an operation of the smartphone using sensors that acquire the smartphone's position and direction, for example. Alternatively, in this respect, buttons may be provided indicating "forward", "backward", "turn right", etc., or another user interface may be used, as appropriate.

The viewing situation video generation unit 36 detects a viewing situation of each viewer watching the distribution video 70, for example, based on the received viewer video and the viewer audio and the position of the icon 74 set in the icon arrangement area 72. The viewing situation video generation unit 36 generates a viewing situation video in which the viewer video is set to be displayed or not to be displayed in a display mode according to the viewing situation. In addition, the viewing situation video generation unit 36 may notify the viewer whose own viewer image is displayed in the viewing situation video, that the own viewer image is displayed. Specifically, the viewing situation video generation unit 36 may change the mode for the icon 74 displayed on the receiving apparatus 50, or may notify the receiving apparatus 50 by letters, images, etc. Further, the viewing situation video generation unit 36 may confirm with the viewer about displaying the viewer video on the receiving apparatus 50 before displaying as the viewer video. Here, the viewer can set a disclosure range of the own viewer video and audio in the receiving apparatus 50, and the distribution video generation unit 35 may synthesize the acquired viewer video into the icon arrangement area 72 based on the set disclosure range. Further, the receiving apparatus 50 may allow the viewer to perform a friend registration for other viewers. As a method of the friend registration, for example, it is preferable to allow the viewer to move the own icon 74 to be within a predetermined distance from the icon 74 of a viewer who has not yet been registered as a friend among the other viewers, and to tap or click the icon 74 of the other viewer to send a friend request to the other viewer who has not yet registered as a friend. When the viewer to whom the friend request has been sent accepts the request, they can be registered as friends each other. As the disclosure range that can be set with the receiving apparatus 50, it is preferable to be able to set public or private for each of the viewing situation video, the viewer video of the receiving apparatus 50 of each friend, and the viewer video of the receiving apparatus 50 of each viewer other than friends, for example.

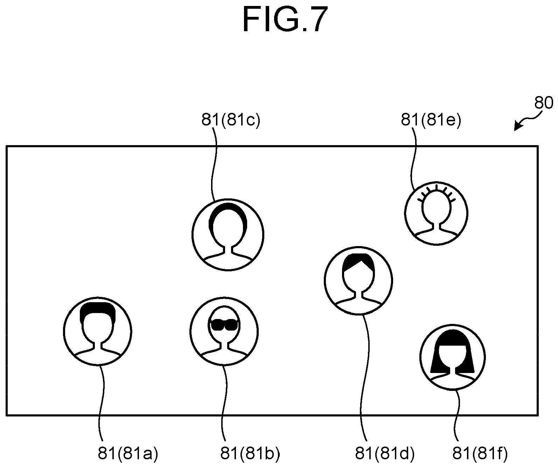

FIG. 7 is a diagram schematically illustrating an example of the viewing situation video. As illustrated in FIG. 7, the viewing situation video 80 includes one or more viewer videos 81. Each of the viewer videos 81 is a video captured by each receiving apparatus 50. The viewing situation video generation unit 36 may arrange one or more viewer videos 81 in predetermined positions in accordance with the viewing situations of the viewers. For example, FIG. 7 illustrates a case where six viewer videos 81 (81a to 81f) are displayed. In the explanation below, when multiple viewer videos 81 illustrated are distinguished from each other, a symbol indicating each viewer video 81 is attached for description, as a viewer video 81a, a viewer video 81b, etc. In this case, it is assumed that the viewer video 81a is the video of the viewer corresponding to the icon 74a in the distribution video 70 illustrated in FIG. 6 etc. Also, it is assumed that the viewer video 81b is the video of the viewer corresponding to the icon 74b in the distribution video 70. Similarly, it is assumed that viewer videos 81c, 81d, 81e, and 81f are the videos of the viewers corresponding to the icons 74c, 74d, 74e, and 74f in the distribution video 70, respectively.

The viewing situation video generation unit 36 may set a display mode of the viewer videos, for example, based on the positional relationship between the position of the display area 71 and the positions of the icons 74.

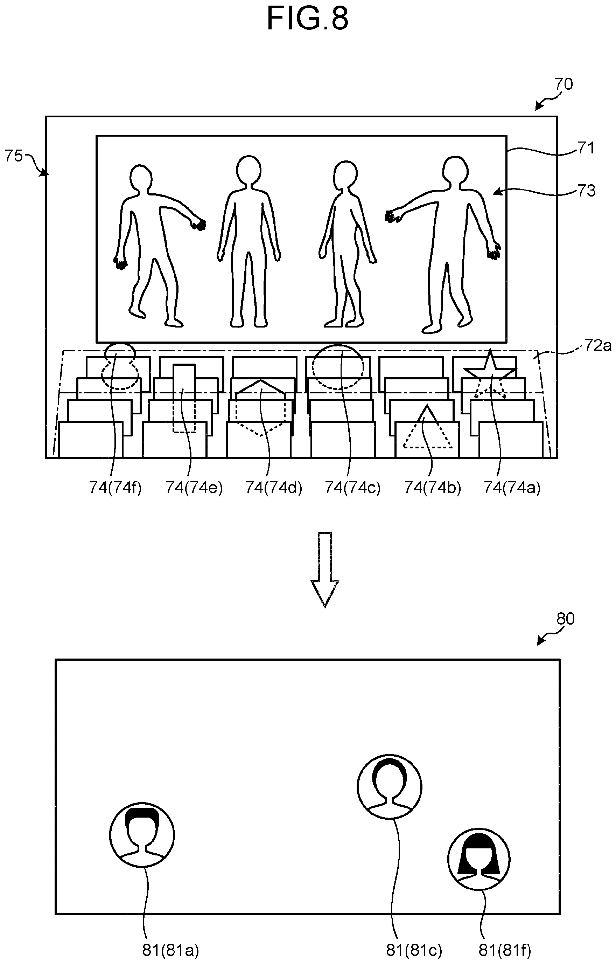

FIG. 8 is a diagram for explaining an example of setting a display mode of the viewer videos. As illustrated in FIG. 8, the viewing situation video generation unit 36 may adopt a mode to display the viewer videos 81 (81a, 81c, and 81f) into the viewing situation video 80, for the viewers whose icons 74 are arranged in a vicinity area 72a of the icon arrangement area 72 near the display area 71 (the viewers corresponding to the icons 74a, 74c, and 74f), and not to display the viewer videos into the viewing situation video 80, for the viewers whose icons 74 are not arranged in the vicinity area 72a (the viewers corresponding to the icons 74b, 74d, and 74e). Here, in FIG. 8, although the icon arrangement area 72 is displayed as seats, the viewing situation video generation unit 36 may not display the seats but display the icon arrangement area 72 as a free space, for example. Further, a right to watch the demonstration video 73 may be treated as a right to seat assignment in the same way as a seat assignment ticket for the actual demonstration site, and the viewing situation video generation unit 36 may allow each icon 74 to be arranged only in the viewer's designated seat in the icon arrangement area 72 when the display area 71 is displayed. Further, in this case, it may be set to charge viewers such that the front seats are more expensive. By using a seat image that imitates the seats as illustrated in FIG. 8 or a seat image of the seats of an existing hall or the like, the viewers can enjoy atmosphere of the demonstration site in addition to the distributed video. Further, since the viewing situation video generation unit 36 generates a video that displays the viewers, whose icons 74 are arranged in the vicinity area 72a in the viewing situation video 80, only the viewers in the front seats can be seen from the performer just like when they are in the demonstration site, which gives a sense of presence to both of the performer and the viewers. Further, since the viewing situation video generation unit 36 generates a video that displays only the viewers positioned in the front seats, the viewer videos 81 can be displayed in the viewing situation video 80 while giving a sense of presence to both of the performer and the viewers within limited resources. Here, the limited resources mean various restrictions, such as the display area of the viewing situation video 80, a processing ability of the server apparatus 80, and a communication load on the network NW, for example. The viewing situation video 80 is not limited to the viewer videos 80, and may include images for the icons 74, avatars for viewers, etc. Further, the viewing situation video generation unit 36 may allow the icons 74 to be moved in an area around the demonstration site. Here, examples of the area around the demonstration site include, for example, a lobby, a shop, a waiting room, etc. within the demonstration site facility, and restaurants near the demonstration site facility. The movement of the icons 74 between the demonstration site and surroundings of the demonstration site may be done through an image imitating a doorway, or may be made by migration in a three-dimensional virtual space. The viewing situation video generation unit 36 may display viewer videos 81 in the viewing situation video 80, only for the viewers whose icons 74 are in the demonstration site. Here, the viewing situation video generation unit 36 may automatically reduce the audio volume of the other viewers in the demonstration site to a predetermined value or even to zero so that the viewer can concentrate on the demonstration audio. Also in this case, the viewing situation video generation unit 36 can display the viewer videos 81 in the viewing situation video 80 while giving a sense of presence to both of the performer and the viewers within limited resources. Further, the viewing situation video generation unit 36 may audio-recognize contents of conversation between the viewers, extract the contents related to the performer from topics of the conversation, and display texts for the contents around the icon 74. In this case, it will become easier for many viewers to share the topics related to the performer and have conversations after the demonstration ends.

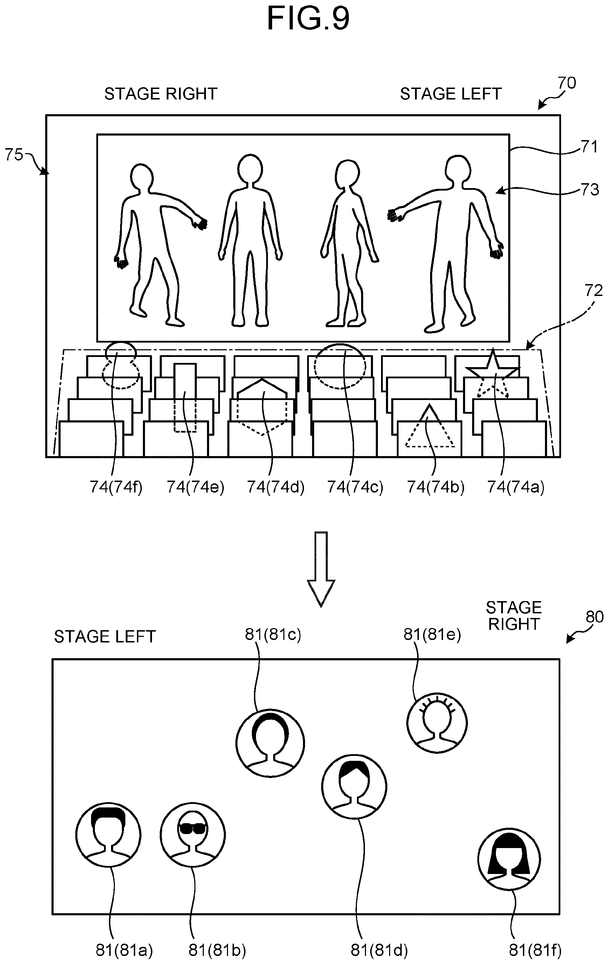

FIG. 9 is a diagram for explaining an example of setting a display mode of viewer videos. As illustrated in FIG. 9, the viewing situation video generation unit 36 may display viewer videos 81a to 81f into the viewing situation video 80 to make the positional relationship of the stage left and stage right the same between the position of the display area 71 and the positions of the icons 74a to 74f. With this manner, the viewer video 81 can be displayed in the same way as when seeing the auditorium from the stage in the actual demonstration site.

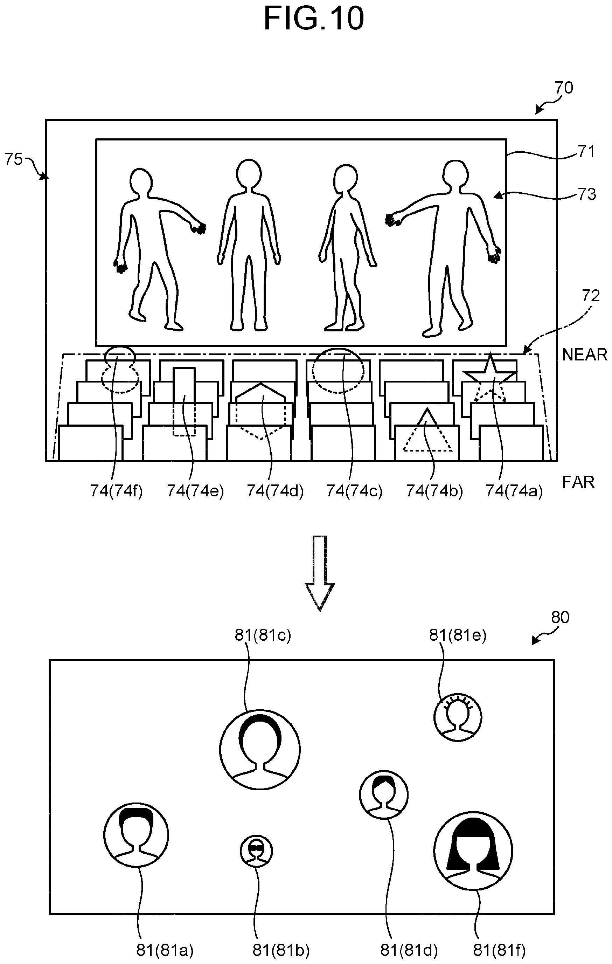

FIG. 10 is a diagram for explaining an example of setting a display mode of the viewer videos. As illustrated in FIG. 10, the viewing situation video generation unit 36 may display the viewer video 81 of a viewer whose icon 74 is arranged at a position close to the display area 71 relatively larger, and display the viewer video 81 of a viewer whose icon 74 is arranged at a position far from the display area 71 relatively smaller. For example, the viewer videos 81c and 81f corresponding to the icons 74c and 74f placed in the closest positions to the display area 71 are displayed the largest in the viewing situation video 80. Also, the viewer video 81a corresponding to the icon 74a placed in the second closest position to the display area 71 is displayed the second largest in the viewing situation video 80. Also, the viewer videos 81d and 81e corresponding to the icons 74d and 74e placed in the third closest positions to the display area 71 are displayed the third largest in the viewing situation video 80. Also, the viewer video 81b corresponding to the icon 74b placed in the farthest position to the display area 71 is displayed the smallest in the viewing situation video 80. With this manner, the viewer videos 81 can be displayed in the same way as when seeing the auditorium from the stage in the actual demonstration site. Each of the viewer videos 81 may be a still image or a moving image, or may dynamically switch the still images or switch between a still image and a moving image as appropriate. When the positions of the icons 74 in the virtual space are linked with the positions of the viewer videos 81 seen by the performer, it is possible to give a sense of presence to the performer. Further, the viewers may have various requests, such as "I want to go forward," "I want the performer to remember my face," "There is a performer I am rooting for on the stage right," "It is embarrassing to be seen by the performer," etc., and the viewers can intuitively input such requests into the system. Further, the distribution system 100 may increase or decrease the number of viewer videos 81 that can be displayed, by dynamically changing the viewer videos 81 while responding to various requests from the viewers. When the distribution system 100 responds to the viewer's various requests, and dynamically changes the viewer videos 81, it is possible to give a sense of presence by an appropriate display. Here, a stepwise charge for viewers may be preset to change the display mode of the viewing situation video 80 in accordance with the amount of the charge.

Further, the viewing situation video generation unit 36 may set the display mode of the viewer videos, for example, in accordance with the position of a performer P1 with respect to the display 19.

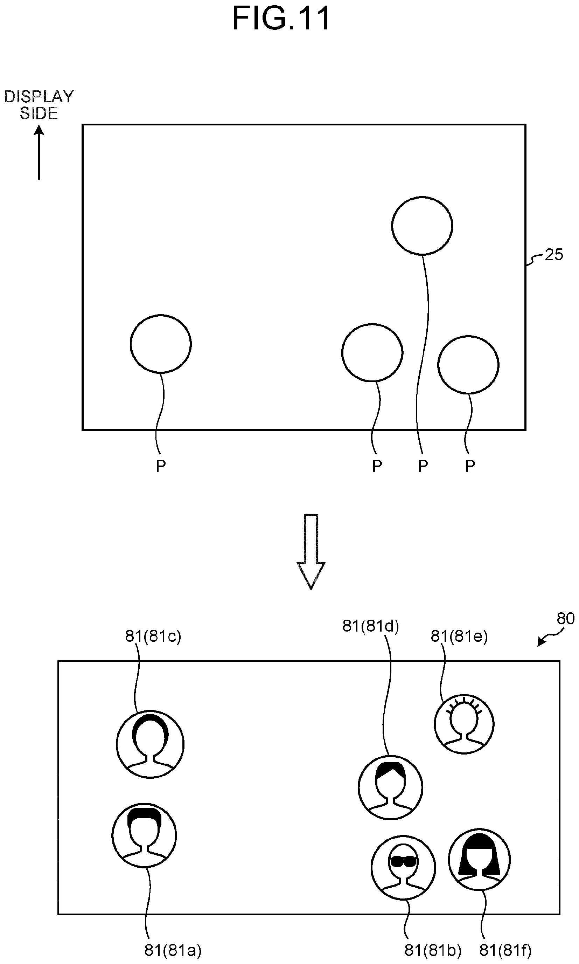

FIG. 11 is a diagram for explaining an example of setting a display mode of the viewer videos. As illustrated in FIG. 11, the viewing situation video generation unit 36 may generate a viewing situation video such that viewer videos 81 are displayed in the area corresponding to the position where a performer P1 exists in the display 19. With this mode, it becomes easier for the performer to grasp the viewer videos 81. Further, when there are multiple performers P1 and it is configured to allow each viewer to select a specific performer, the viewing situation video generation unit 36 may generate a viewing situation video such that the viewer video 81 of a viewer who selected a performer is displayed in the area corresponding to the position of the performer selected by the viewer in the display 19. With this mode, the viewer video 81 of the viewer can be displayed near the performer selected by the viewer. Specifically, the distribution apparatus 10 or the server apparatus 30 may specify the position of the performer by using the imager 16 to perform a face detection, a line-of-sight detection, a skeleton detection, etc., or by using other sensors, such as a radiation thermometer or a ToF (Time of Flight) sensor. The viewing situation video generation unit 36 generates a viewer video 81 based on the position of the performer. Especially when a viewer is posting an image or the like that cheers a specific performer, the viewing situation video generation unit 36 may image-recognize the letters, face images, etc. included in the cheering image, and display the viewer video 81 at a position easily visible for the cheered performer. The viewing situation video generation unit 36 may record the detected cheering image or audio-recognize a cheering audio to create a data base that associates each viewer with the cheered performer, and may generate a video that displays the viewer video 81 of a viewer supporting a specific performer at a position easily visible for the specific performer. The viewing situation video generation unit 36 may generate a viewing situation video 80 that displays the viewer video 81 to be changed dynamically in accordance with the movement of a performer.

The viewing situation video generated as described above is transmitted from the communication unit 31 to the distribution apparatus 10 under the control of the communication controller 34. The distribution apparatus 10 receives the transmitted viewing situation video. The communication controller 22 acquires the received viewing situation video. The output controller 23 causes the acquired viewing situation video to be displayed on the display 19.

Further, the viewing situation video generation unit 36 may set a display mode of the viewer videos in accordance with a positiveness degree that indicates a degree of the viewer's positive behavior with respect to the distribution video 70. The positiveness degree is an index that takes a higher value as speech and action toward the distribution video 70 is more positive. Examples of such speech and action include sending a cheer to the performer, cheering with a loud voice, moving largely, moving in response to the movement of the performer, dancing, using cheering goods for the performer, making a smiley face, being moved to tears (moving emotions), seeing the viewer' face shown on the viewer video, etc. The controller 32 may measure the positiveness degree of the viewer from the viewing situation video by combining an image recognition, a face recognition, an audio recognition, a skeleton authentication, etc. as appropriate, or by using other sensors such as a radiation thermometer or a ToF (Time of Flight) sensor. Further, the positiveness degree takes a higher value when the speech and action toward the distribution video 70 is not passive. Examples of such speech and action include a case in which displaying of the viewer video of the viewer in the viewing situation video is permitted, and the viewer has no history of saying negative words or forbidden words to the distribution videos 70. The controller 32 can calculate a score for each of predetermined items including the examples mentioned above, and set the positiveness degree in accordance with the score. For example, the viewing situation video generation unit 36 can generate a viewing situation video 80 to display the viewer video 81 of a viewer whose positiveness degree is equal to or larger than a reference value, and not to display the viewer video 81 of a viewer whose positiveness degree is smaller than the reference value. The controller 32 may calculate the positiveness degree based on an image recognition result of the viewing situation video, or may calculate the positiveness degree based on contents of text comments input in a comment column by the viewer. Further, the controller 32 may be set to be linked with a SNS (Social Networking Service) account etc. of the viewer, and may refer to SNS information to calculate the positiveness degree. Further, when the distribution system 100 is used for school lessons or the like, the viewing situation video generation unit 36 may generate the viewer video to deliberately and preferentially display a viewer such as a sleeping student whose positiveness degree is calculated to be low.

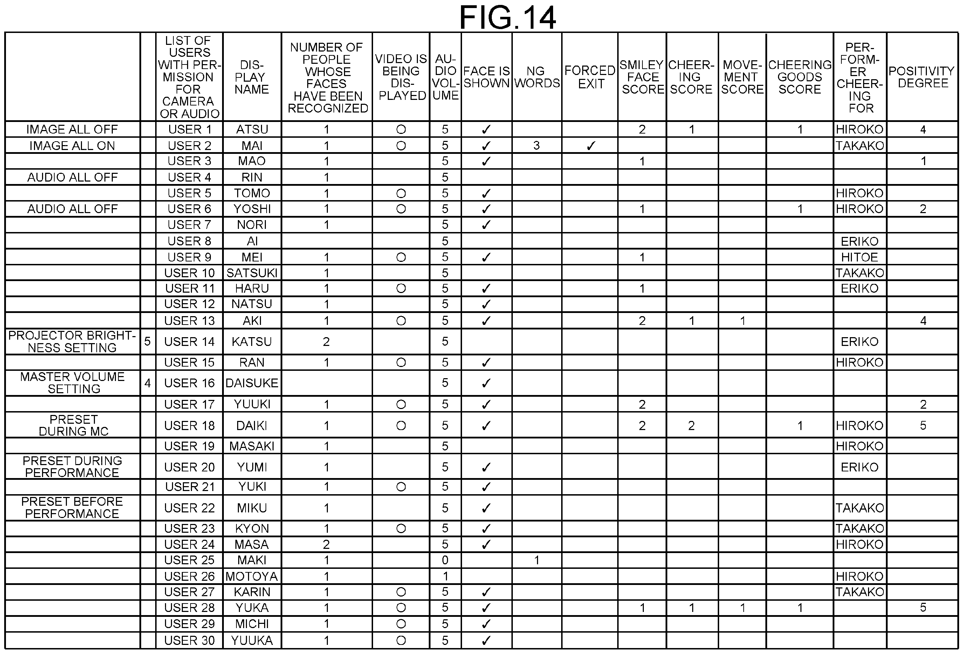

FIG. 14 is a diagram illustrating an example of a management screen page to be confirmed by operators of the distribution apparatus 10. In the example of the management screen page illustrated in FIG. 14, a management status for each of the users 1 to 30, a forced exit button, a brightness management of the display 19, a viewer volume management, etc. are displayed. The management status of the users includes a displayed name, a situation whether or not the viewer video 81 is being displayed, a situation whether or not the viewer's face is shown in the viewer video 81, and a number of times of issued NG words. In addition, a smiley face score, a cheering score, a movement score, and a cheering goods score are displayed in the management status of the users, and the positiveness degree is specified as a sum of these scores. In this example, the positiveness degree is a sum of respective scores, but calculation using a predetermined coefficient may be performed. In the example of the management screen page illustrated in FIG. 14, the management status of each of the users 1 to 30 is displayed. However, it may be preset to display the management status only of the user whose viewing situation video is being displayed, or to display the management status only of the user whose score or status has been changed. In this way, the score can be calculated for each of the predetermined items. Here, the score calculation for each of the predetermined items may be performed automatically by the controller of the server apparatus or the like, instead of being displayed on the management screen page.

The performer can respond to the viewing situation video 80 displayed on the display 19. When the performer responds to the viewing situation video displayed on the display 19, the response information acquisition unit 24 acquires response information of the performer. The response information acquisition unit 24 may detect a line of sight of the performer and acquire the response information based on a detection result. In this case, the response information acquisition unit 24 may detect the line of sight of the performer based on the demonstration video captured by the imager 16, for example. The response information acquisition unit 24 detects whether the performer is gazing at the display 19 based on the detection result, and, when the performer is gazing at the display 19, further detects which position of the display 19 the performer is gazing at. When detecting that the line of sight of the performer is gazing at a part or its vicinity in the display 19 where the viewer video is displayed, the response information acquisition unit 24 determines that the performer is responding to the viewer video. In this case, the response information acquisition unit 24 extracts the viewer video shown at a position the performer is gazing at and at its vicinity, and specifies the viewer (or the receiving apparatus 50) that corresponds to the extracted viewer video. In this way, the response information acquisition unit 24 acquires, as the response information, the response of the performer and information indicating the viewer as the target of the performer's response.

Examples of the performer's response to the viewer video are not limited to directing the line of sight to the viewer video. For example, it may be cases in which the performer speaks, waves a hand, points a finger, or sends the line of sight, to a viewer video, or the performer or an operator of the distribution apparatus 10 selects the viewer video by clicking or tapping the viewer video by the operation unit 18. In the example of FIG. 3, the operation unit 18 is a picture imitating a mouse to be used by the operator of the distribution apparatus 10. However, the operation unit 18 to be used by the performer may be, for example, a microphone equipped with a button or a portable terminal so that it can be used during the demonstration. For example, based on the demonstration video and the demonstration audio, the response information acquisition unit 24 acquires, as the response information, the fact that the performer has spoken to the viewer video, and the viewer video that the performer has spoken to. For example, based on the demonstration video, the response information acquisition unit 24 acquires, as the response information, the fact that the performer has waved his hand, pointed his finger, and/or sent the line of sight, and the viewer video of such actions. Further, when the performer has selected the viewer video by the operation unit 18, the response information acquisition unit 24 acquires, as the response information, the fact that the performer had the response by the selection and the viewer video of the selection.

The communication controller 22 causes the response information acquired by the response information acquisition unit 24 to be transmitted from the communication unit 13 to the server apparatus 30. The server apparatus 30 receives the response information transmitted from the distribution apparatus 10. The communication controller 34 acquires the response information.

The server apparatus 30 may change a display mode of at least a part of the distribution video based on the response information. For example, in the distribution video 70 to be transmitted to the receiving apparatus 50 of the viewer who is a target of the performer's response, the distribution video generation unit 35 may change the display mode of the icon 74 indicating the viewer. For example, the distribution video generation unit 35 may set a mode that shows the icon 74 to be changed over time by flashing, expanding/reducing, moving, transforming, changing a color, or their combination.

With this operation, in the display 59 of the receiving apparatus 50 of the viewer who is the target of the performer's response, the icon 74 is displayed in a state where the display mode has been changed. The viewer can grasp that there was a response from the performer by seeing the change in the display mode of the icon 74. In the distribution system 100 according to the embodiment, the distribution video 70 distributed from the performer allows two-way communication from the viewer to the performer and from the performer to the viewer.

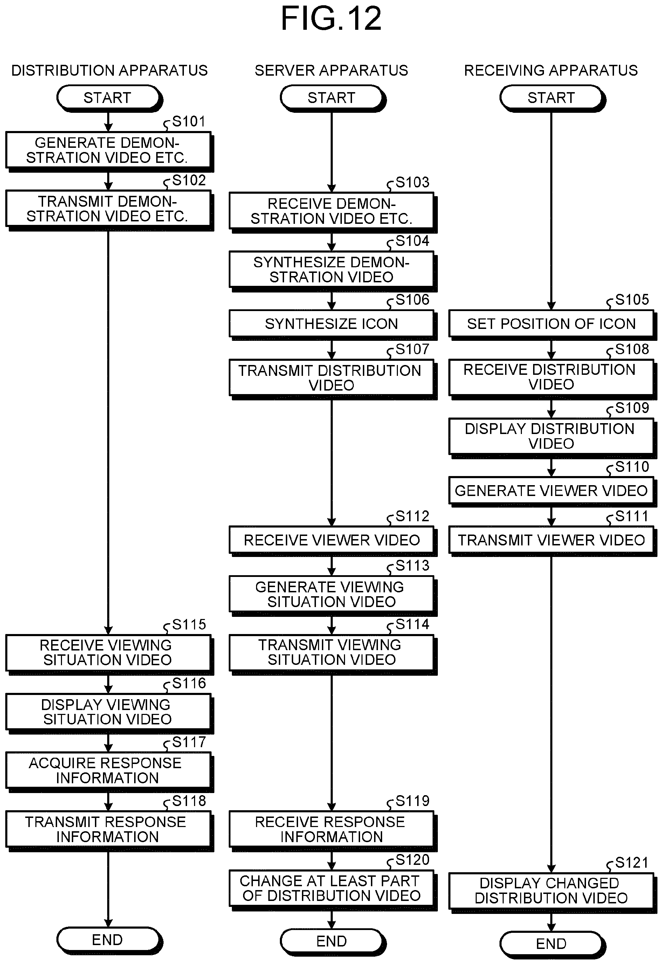

FIG. 12 is a flowchart illustrating an operation flow of the distribution system 100 according to the embodiment. As illustrated in FIG. 12, in the distribution system 100, the operation starts (START) by using, as a trigger, an activation of the distribution apparatus 10, the server apparatus 30, and the receiving apparatus 50, or a start operation of capturing images or picking up sounds. The imager 16 captures images and the audio input unit 17 picks up sounds from the demonstration by the performer to generate a demonstration video and a demonstration audio (step S101). The generated demonstration video and the demonstration audio are input to the input unit 11. The communication controller 22 transmits the input demonstration video and the input demonstration audio from the communication unit 13 to the server apparatus 30 (step S102). The server apparatus 30 receives the demonstration video and the demonstration audio transmitted from the distribution apparatus 10 (step S103). The distribution video generation unit 35 synthesizes the demonstration video 73 into the display area 71 of the background image 75 (step S104).

On the other hand, each of the viewers accesses the server apparatus 30 from the receiving apparatus 50 and sets a position of an icon 74 (step S105). The distribution video generation unit 35 of the server apparatus 30 synthesizes the icon 74 at the set position (step S106). Consequently, a distribution video 70 is generated. The communication controller 22 transmits the generated distribution video 70 from the communication unit 31 to each of the receiving apparatuses 50 (step S107).

Each receiving apparatus 50 receives the distribution video 70 transmitted from the server apparatus 30 (step S108). The received distribution video 70 is acquired by the communication controller 62 and displayed on the display 59 by the output controller 63 (step S109). The viewer can watch the distribution video 70 displayed on the display 59.

The imager 56 captures images and the audio input unit 57 picks up sounds from the viewer watching the distribution video 70 to generate a viewer video and a viewer audio (step S110). The viewer video and the viewer audio are input to the input unit 51, and transmitted from the communication unit 53 to the server apparatus 30 under the control of the communication controller 62 (step S111).

The server apparatus 30 receives the viewer video and the viewer audio (step S112). The viewing situation video generation unit 36 detects the viewing situation of the viewer watching the distribution video 70 to generate a viewing situation video that displays or does not display the viewer video in a display mode according to the viewing situation (step S113).

The viewing situation video is transmitted from the communication unit 31 to the distribution apparatus 10 under the control of the communication controller 34 (step S114). The distribution apparatus 10 receives the transmitted viewing situation video (step S115). The viewing situation video is acquired by the communication controller 22, and displayed on the display 19 by the output controller 23 (step S116).

When the performer responds to the viewing situation video displayed on the display 19, the response information acquisition unit 24 acquires the response information of the performer (step S117). The communication controller 22 transmits the response information acquired by the response information acquisition unit 24 from the communication unit 13 to the server apparatus 30 (step S118). The server apparatus 30 receives the response information transmitted from the distribution apparatus 10 (step S119).

The server apparatus 30 changes the display mode of at least a part of the distribution video based on the response information (step S120). In the display 59 of the receiving apparatus 50 of the viewer who is the target of the performer's response, the icon 74 is displayed in a state where the display mode has been changed (step S121). The viewer can grasp that there was a response from the performer by seeing the change of the display mode of the icon 74. Here, in the flowchart illustrated in FIG. 12, there is "END" after each of the operations ends in the distribution apparatus 10, the server apparatus 30, and the receiving apparatus 50. However, it is preferable to repeatedly perform a series of operations (loop) until an end operation is received, a predetermined time elapses, or a predetermined number of times (loops) elapses.

As described above, A distribution system 100 comprises a distribution apparatus 10 configured to acquire a demonstration video 73 of a performer who performs a demonstration and transmit the acquired demonstration video 73; a server apparatus 30 configured to receive the demonstration video 73 transmitted from the distribution apparatus 10, generate a distribution video 70 based on the received demonstration video 73, and transmit the generated distribution video 70; and
a receiving apparatus 50 configured to receive the distribution video 70 transmitted from the server apparatus 30 to display the received distribution video (70) on a display 59 of a receiving side, wherein the receiving apparatus 50 is further configured to acquire a viewer video 81 by capturing images of a viewer watching the distribution video 70 to transmit the acquired viewer video 81; the server apparatus 30 is further configured to receive the viewer video 81 transmitted from the receiving apparatus 50, generate a viewing situation video 80 in which the viewer video 81 is displayed or is not displayed in a display mode according to a viewing situation of the viewer watching the distribution video 70, and transmit the generated viewing situation video 80; and the distribution apparatus 10 is further configured to receive the viewing situation video 80 transmitted from the server apparatus 30 to display the received viewing situation video 80 on a display 19 of a distributing side.

According to this configuration, the viewer video 81 is acquired in the receiving apparatus 50, the viewing situation video 80 is generated in the server apparatus 30, and the viewing situation video 80 is displayed on the display 19 in the distribution apparatus 10. Therefore, the performer can easily grasp the viewing situations of the viewers by seeing the viewing situation video 80 displayed on the display 19.

In the distribution system 100 according to the embodiment, the distribution apparatus 10 is further configured to acquire response information when the performer responds to the viewer video 81 displayed on the display (19) of the distributing side to transmit the acquired response information, and the server apparatus 30 is further configured to receive the response information transmitted from the distribution apparatus 10 to change a display mode of at least a part of the distribution video 70 based on the received response information. According to this configuration, the viewer can grasp that there was a response from the performer by confirming the change in the display mode in the distribution video 70. Therefore, it is possible to easily perform communication from the performer to the viewer.

In the distribution system 100 according to the embodiment, the distribution apparatus 10 is further configured to display the viewer video 81 in a display mode according to a positional relationship between the performer and the display 19 of the distributing side. According to this configuration, the performer can easily recognize the viewer video 81.

In the distribution system 100 according to the embodiment, the server apparatus 30 is further configured to generate the distribution video 70 that includes a display area 71 for displaying the demonstration video 70 and an icon arrangement area 72 for arranging an icon 74 of a viewer watching the demonstration video 70 corresponding to the display area 71, and the viewing situation is further configured to include a positional relationship between the display area 71 and the icon 74. According to this configuration, the viewing situation video 80 can be generated in various display modes in accordance with the positional relationship between the display area 71 and the icons 74.

In the distribution system 100 according to the embodiment, the viewing situation is further configured to include a positiveness degree that indicates a degree of positiveness of the viewer with respect to the distribution video 70, and the server apparatus 30 is further configured to generate the viewing situation video 80 in which the viewer video 81 of the viewer whose positiveness degree is smaller than a reference value is not displayed. According to this configuration, it is possible to selectively display the viewing situation of viewer whose positiveness degree is high with respect to the distribution video 70 on the display 19.

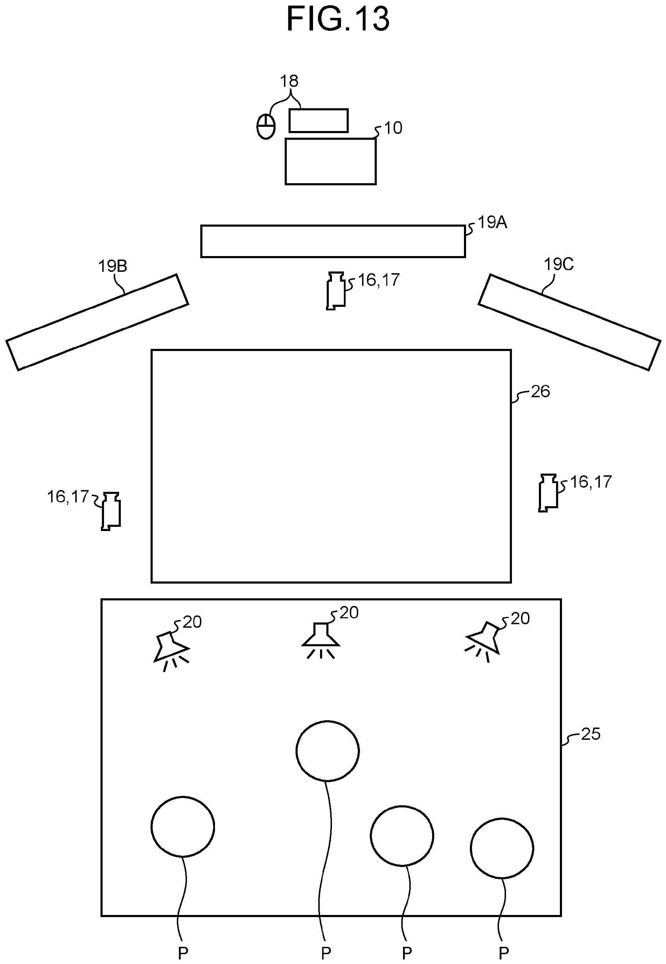

The technical scope of the present disclosure is not limited to the embodiments described above, but may be modified as appropriate without departing from the gist of the present disclosure. For example, in the embodiments described above, an explanation has been given of a case as an example where the distribution apparatus 10 is placed in an environment of a no-audience state, but not limited thereto. FIG. 13 is a diagram schematically illustrating the distribution apparatus 10 and another example of the devices connected to the distribution apparatus 10. There may be a configuration in which an auditorium 26 is arranged against the demonstration space 25 as illustrated in FIG. 13. In this case, displays 19A, 19B, and 19C are placed behind the auditorium 26 as seen from the demonstration space 25. In this configuration, the performer can grasp both the reaction of audience members in the auditorium 26 and the reaction of the viewers on the receiving apparatuses 50. Further, the audience members in the auditorium 26 and the viewers on the receiving apparatuses 50 can share reactions to the demonstration by the performer. Here, the demonstration video 73 may be composed of multiple videos. For example, by setting a size of the distribution video 70 to be sufficiently larger as compared with a sizes of the demonstration video 73 and the icon 74, the viewer can watch the demonstration while moving the icon 74, approaching the demonstration video 73 as appropriate, and changing the display range. For example, the demonstration videos 73 may be placed on multiple websites, and the viewer may be allowed to go back and forth among the multiple websites to watch the multiple demonstration videos 73. By placing the multiple demonstration videos 73, it is possible to hold an event so-called a festival where multiple performers simultaneously perform demonstrations on multiple stages, or an event such as an exposition or academic conference where multiple lectures or poster sessions are held at the same time. In the embodiments described above, each function (operation) has been described as a part of (implemented in) the distribution apparatus 10, the server apparatus 30, or the receiving apparatus 50. However, this is a mere example. As long as each function (operation) of the distribution apparatus 10, the server apparatus 30, and the receiving apparatus 50 can be executed by the system as a whole, there is no limit to the entity that performs the function (operation). Further, the distribution system 100 may include only each function (operation) of the distribution apparatus 10 and the server apparatus 30, and may not include each function (operation) of the receiving apparatus 50.

### Industrial Applicability

The distribution system according to the present disclosure can be utilized, for example, in a processing device such as a computer.

### Reference Signs List

P1 performer
NW network
10 distribution apparatus
11, 51 input unit
12, 52 output unit
13, 31, 53 communication unit
14, 32, 54 controller
15, 33, 55 storage
16, 56 imager
17, 57 audio input unit
18, 58 operation unit
19, 19A, 19B, 19C, 59 display
20, 60 audio output unit
21, 61 input information acquisition part
22, 34, 62 communication controller
23, 63 output controller
24 response information acquisition part
25 demonstration space
26 customer seating
30 server apparatus
35 distribution video generation part
36 viewing situation video generation part
37 volume setting part
50 receiving apparatus
70 distribution video
71 display area
72 icon arrangement area
72a vicinity area
73 demonstration video
74 icon
75 background image
80 viewing situation video
81 viewer video
100 distribution system

## Claims

1. A distribution system comprising:
a distribution apparatus configured to acquire a demonstration video of a performer who performs a demonstration and transmit the acquired demonstration video;
a server apparatus configured to receive the demonstration video transmitted from the distribution apparatus, generate a distribution video based on the received demonstration video, and transmit the generated distribution video; and
a receiving apparatus configured to receive the distribution video transmitted from the server apparatus and display the received distribution video on a display of a receiving side, wherein
the receiving apparatus is further configured to acquire a viewer video by capturing images of a viewer watching the distribution video and transmit the acquired viewer video;
the server apparatus is further configured to receive the viewer video transmitted from the receiving apparatus, generate a viewing situation video in which the viewer video is displayed or not displayed in a display mode according to a viewing situation of the viewer watching the distribution video, and transmit the generated viewing situation video; and
the distribution apparatus is further configured to receive the viewing situation video transmitted from the server apparatus and display the received viewing situation video on a display of a distributing side.

2. The distribution system according to claim 1, wherein
the distribution apparatus is further configured to acquire response information when the performer responds to the viewer video displayed on the display of the distributing side and transmit the acquired response information, and
the server apparatus is further configured to receive the response information transmitted from the distribution apparatus and change a display mode of at least a part of the distribution video based on the received response information.

3. The distribution system according to claim 1 or 2, wherein the distribution apparatus is further configured to display the viewer video in a display mode according to a positional relationship between the performer and the display of the distributing side.

4. The distribution system according to any one of claims 1 to 3, wherein
the server apparatus is further configured to generate the distribution video that includes a display area for displaying the demonstration video and an icon arrangement area for arranging an icon of the viewer watching the demonstration video corresponding to the display area, and
the viewing situation is further configured to include a positional relationship between the display area and the icon.

5. The distribution system according to any one of claims 1 to 4, wherein
the viewing situation is further configured to include a positiveness degree that indicates a degree of positiveness of the viewer with respect to the distribution video, and
the server apparatus is further configured to generate the viewing situation video in which the viewer video of the viewer whose positiveness degree is smaller than a reference value is not displayed.

6. A distribution system configured to acquire a demonstration video of a performer who performs a demonstration, generate a distribution video based on the demonstration video, and distribute the generated distribution video, wherein,
when a viewer video obtained by capturing images of a viewer watching the distribution video is transmitted from a side of the viewer, the distribution system is further configured to receive the viewer video to generate a viewing situation video in which the viewer video is displayed or is not displayed in a display mode according to a viewing situation of the viewer watching the distribution video.
